# EUROPÄISCHE PATENTSCHRIFT

(11) **EP 2 453 252 B1**
(45) Veröffentlichungstag und Bekanntmachung des Hinweises auf die Patenterteilung: **10.06.2015**
(21) Anmeldenummer: 10014619.0
(22) Anmeldetag: 15.11.2010
(51) Int. Cl.: G01S 7/481, G01S 7/497, G01S 17/02, G01S 17/87, G01S 17/89

(54) **Energiespar-3D-sensor**
Energy efficient 3D sensor
Capteur 3D à économie d'énergie

(43) Veröffentlichungstag der Anmeldung: 16.05.2012
(60) Teilanmeldung: 13004164.3
(73) Patentinhaber: Cedes AG, 7302 Landquart (CH)
(72) Erfinder: Beat De Coi, 7320 Sargans (CH); Leutenegger, Tobias, 7000 Chur (CH)
(74) Vertreter: Otten, Roth, Dobler & Partner

(56) Entgegenhaltungen:
- EP-A1- 1 031 471
- EP-A2- 1 933 167
- US-A1- 2002 172 514
- US-A1- 2004 135 990
- US-A1- 2008 285 842
- US-A1- 2010 020 209

## Beschreibung

### Stand der Technik:

Zur Erhöhung der Betriebssicherheit von automatisch zu öffnenden Türen und/oder Toren ist die Verwendung von handelsüblichen 3D-Überwachungssensoren bekannt. Diese signalisieren bei Erfassung eines Objekts in einem durch die Bewegung der zu öffnenden Tür und/oder des zu öffnenden Tores liegenden Gefahrenbereich eine potentielle Gefahrensituation. Beispielsweise können Sie hierzu der betreffenden Tür- und/oder Torsteuerung ein entsprechendes Signal übermitteln.

### Aufgabe der Erfindung:

Der Erfindung liegt die Aufgabe zugrunde, einen Sensor gemäß dem einleitend genannten Stand der Technik zu verbessern.

Die Lösung dieser Aufgabe erfolgt, ausgehend vom Oberbegriff des Anspruchs 1, durch dessen kennzeichnende Merkmale. In den Unteransprüchen sind vorteilhafte und zweckmäßige Weiterbildungen angegeben.

Dementsprechend betrifft die vorliegende Erfindung einen 3-D-Sensor zur Steuerung eines Steuervorgangs mit einer Lichtquelle mit mindestens einer Beleuchtungsquelle, einer Empfangsmatrix die geeignet ist, ein komplettes Bild von von Flächen reflektierten Lichts eines Raumabschnitts zu empfangen, einer Auswertevorrichtung zur Ermittlung des Abstands der Flächen von der Empfangsmatrix, und einer Kontrollvorrichtung zur Erkennung eines Objekts. Dieser 3-D-Sensor zeichnet sich dadurch aus, dass die Lichtquelle einen Teilbereich des Raumabschnitts beleuchtet der mindestens einen Zwischenraum aufweist.

Der Raumabschnitt kann hierbei insbesondere durch jenen Teil eines Raumes definiert werden, der sich zwischen der Empfangsmatrix und der auf ihr abzubildenden Fläche erstreckt. Beispielsweise ist die Empfangsmatrix im 3-D-Sensor an einer Oberseite einer Türe befestigt und die abzubildende Fläche ist eine rechteckige Fläche am Boden vor der Türe. Bei dieser Abbildung kann es sich insbesondere bevorzugt um eine Bijektiv-Abbildung handeln.

Die Tiefe des Raumabschnittes zwischen Empfangsmatrix und der auf ihr abzubildenden Fläche kann für verschiedene Pixel der Empfangsmatrix unterschiedlich sein. Dies kann sich einerseits aus der Auffächerung der betreffenden Raumstrahlen entsprechend der Größe des von der Matrix erfassbaren Feldes und des jeweils damit diskret verbundenen Abstandes ergeben. Eine zweite Ursache kann in Unebenheiten in der von der Empfangsmatrix zu erfassenden Gegenstandsebene begründet liegen, wie sie sich beispielsweise durch darin befindliche und/oder darin eindringende Objekte ergeber: können.

Hierdurch sind entsprechend gestufte Abstände zwischen der Empfangsmatrix und der jeweils von der Lichtquelle ausgesandtes Licht reflektierenden Oberfläche, wie Boden, Wand oder eben ein Objekt feststellbar. Die Ermittlung dieser Abstände kann beispielsweise durch eine Laufzeitermittlung für das von der betreffenden Oberfläche zum jeweiligen Pixel der Empfangsmatrix reflektierte Licht erfolgen. Dies kann in besonders bevorzugter Weise anhand der Auswertevorrichtung geschehen, die mit den Signalen der einzelnen Pixel der Empfangsmatrix beaufschlagt werden kann. Hierauf basierend kann die Kontrollvorrichtung überprüfen, ob sich ein Objekt in dem zu überwachenden Raumabschnitt befindet.

Sofern ein solches Objekt erkannt wird, kann im Weiteren anhand eines beispielsweise entlang eines definierbaren Gefahrenabstandes zwischen einer potentiellen Gefahrenquelle, wie z. B. einer zu bewegenden Tür und/oder eines zu bewegenden Tores oder dergleichen und dem erkannten Objekt eine abgestufte Gefahrensignalisierung, wie z. B. niedrig, mittel, hoch erfolgen.

Der erfindungsgemäßen Ausbildung des 3-D-Sensors dahingehend, dass die Lichtquelle lediglich einen Teilbereich des Raumabschnittes beleuchtet, der mindestens einen Zwischenraum aufweist, welcher insbesondere nicht oder zumindest nicht in dem Maße von der Lichtquelle beleuchtet wird, wie es für den Teilbereich des Raumabschnittes vorgesehen ist, liegt die Erkenntnis zugrunde, dass durch eine Konzentrierung der von der Lichtquelle ausgesandten Lichtintensität auf einen solchen Teilbereich eine entscheidende Erhöhung der von der Oberfläche dieses Teilbereichs auf die Empfangsmatrix reflektierte Lichtstrahlung erreicht werden kann. Dies bewirkt wiederum eine wesentlich verbesserte Signalerkennung, da der Pegel eines Schwellwertes für die Signalauswertung zur Ausblendung von Rauschsignalen entsprechend angehoben werden kann.

Damit kann insgesamt für die vom 3-D-Sensor ausgewerteten Teilbereiche des zu überwachenden Raumabschnitts bei gleicher Sendeleistung im Vergleich zu einem vollflächig beleuchteten Raumabschnitt eine massiv verbesserte Schaltempfindlichkeit und damit Schaltgenauigkeit erreicht werden. Vor allem kann die Reichweite des Sensors durch die Konzentration der Sendeleistung entsprechend erhöht werden.

Bezüglich eines zweiten Aspektes kann durch den derart aufgebauten 3-D-Sensor eine deutliche Energie-Einsparung gegenüber einem 3-D-Sensor erzielt werden, der bei vergleichsweise gleicher Schaltempfindlichkeit denselben Raumabschnitt vollflächig ausleuchten würde. In diesem Zusammenhang wird durch den erfindungsgemäß vorgeschlagenen 3-D-Sensor auch eine deutliche Reduzierung der von der Lichtquelle erzeugten Abwärme bewirkt, was wiederum auch eine Reduzierung oder gegebenenfalls sogar den völligen Entfall von Kühlmittel ermöglicht. Zusätzlich wirkt sich diese Reduzierung von Verlustleistung und nicht erzeugter Abwärme auch positiv auf die Standzeit des 3-D-Sensors und seiner Komponenten, insbesondere seiner temperaturempfindlichen Komponenten positiv aus.

Um den zu überwachenden Raumabschnitt möglichst in seinen kompletten äußeren Grenzen auf Vorhandensein und/oder Eindringen eines Objektes hin überwachen zu können, ist eine Aufteilung des von der Lichtquelle beleuchteten Teilbereichs durch Definierung mindestens eines in diesem Sinne von der Lichtquelle nicht explizit beleuchteten Zwischenraums vorgesehen.

Die dadurch entstehenden beleuchteten und nicht beleuchteten Bereiche des zu überwachenden Raumabschnitts können bezogen auf die beleuchtete Grundfläche verschiedenste geometrische Flächenbereiche mit verschiedensten geometrischen Konturen darstellen.

Durch die Aufteilung des Teilbereichs in mehrere Unterteilbereiche, die durch einen Zwischenraum getrennt sind, kann eine beispielsweise gleichmäßige Signalerfassung über die Grundfläche des zu überwachenden Abschnittes ermöglicht werden. Zum Beispiel können hierdurch Beleuchtungsinseln über die Grundfläche verteilt werden. Möglich ist aber auch eine Konzentrierung mehrerer Unterteilbereiche auf bestimmte Bereiche der Grundfläche des zu überwachenden Raumabschnittes, wie z. B. insbesondere deren Randbereich. Damit kann der Sensor insbesondere hinsichtlich der Überwachung eines Eindringens eines Objekts in den zu überwachenden Raumbereich durch die so vorgenommene lokale Erhöhung der Lichtintensität speziell ausgestaltet werden, beispielsweise in einem entsprechend wählbaren Betriebsmodus.

Weitere geometrische Figuren bezogen auf die Grundfläche des zu überwachenden Raumabschnitts können durch eine entsprechende Vorgabe für die Anordnung des Teilbereichs, insbesondere durch die Anordnung solcher Unterteilbereiche in symmetrische und/oder unsymmezrische Bereiche erfolgen, wie z. B. eine L-Form, eine U-Form, eine D-Form, eine umlaufende Rechteck-Form, eine Reihen- und/oder Spaltenanordnung, eine mäandrische Beleuchtungskontur, eine gezackte, wie z. B. Zickzacklinie, Rechtecksgeometrien und dergleichen mehr, wobei diese auch mehrfach und/oder gemischt mit anderen Mustern vorgesehen sein können. Insbesondere bevorzugt ist eine diskrete Beleuchtung einzelner Bereiche des gesamten zu überwachenden Raumabschnittes vorgeseher., beispielsweise in der Form diskreter Beleuchtungsspots.

In einer bevorzugten Ausführungsform des 3-D-Seisors kann die Lichtquelle die Unterteilbereiche gleichzeitig beleuchten. Hierdurch kann eine entsprechende Bewertung des gesamten Teilbereichs des zu überwachenden Raumbereichs zu einem bestimmten Zeitpunkt erfolgen. In einer demgegenüber abgewandelten Ausführungsform kann aber auch eine zeitversetzte Beleuchtung wenigstens einzelner Unterteilbereiche des zu überwachenden Raumabschnittes vorgesehen sein. Zum Beispiel kann während einer Zeit, in welcher kein Objekt in dem zu überwachenden Raumabschnitt detektiert ist, eine Fokussierung auf die Randüberwachung erfolgen und z. B. innerhalb dieses Randbereich liegende Unterteilbereiche während dieser Zeit nicht beleuchtet werden. Hierdurch ist eine weitere Energieeinsparmöglichkeit realisierbar. Bei Detektion eines Objekts können dann weitere Unterteilbereiche zusätzlich beleuchtet werden, um die Auflösung des 3-D-Sensors zu erhöhen. Dies kann insbesondere in Richtung einer ansteigend definierten Gefahr durch Verkürzen des Abstandes zwischen einem detektieren Objekt und dem für dieses Objekt gegebenenfalls eine Gefahr darstellenden, durch einen entsprechenden Antrieb ansteuerbaren beweglichen Elementes, wie Tür, Tor oder auch ein Fenster und dergleichen mehr.

Um gewährleisten zu können, dass ein Objekt zuverlässig erkannt wird, ist die Lichtquelle derart ausgestaltet, dass ein Abstand zwischen den Teilbereichen und/oder den Unterteilbereichen kleiner ist, als die kleinste Ausdehnung eines für die Erkennung eines eindringenden und/oder sich in dem zu überwachenden Raumabschnittes befindlichen Prüfobjektes. Die Maße eines solchen Prüfobjektes betragen in einer ersten Ausführungsform vorzugsweise 70 cm x 30 cm x 20 cm. Für kritischere Anwendungsbereiche können diese Maße aber durchaus deutlich kleiner ausfallen, so dass das kleinste Maß beispielsweise bei etwa 10 cm, etwa 5 cm oder sogar noch darunter liegen kann. Das Prüfobjekt stellt die Maße eines relevanten Objekts dar. Etwa eines kleinen Kindes.

Durch die Ausbildung der Lichtquelle, z. B. in der Form mehrerer Beleuchtungsquellen, kann jedem Unterteilbereich eine Beleuchtungsquelle direkt zugeordnet werden. Hierdurch kann beispielsweise durch eine entsprechende Anordnung der Beleuchtungsquellen zueinander die Lichtquelle derart ausgebildet werden, dass sie, gegebenenfalls durch entsprechende Ansteuerung der einzelnen Beleuchtungsquellen, verschiedene Beleuchtungsmuster zur Überwachung des zu überwachenden Raumabschnittes erzeugen kann. Durch die Reduzierung der Ausleuchtung des zu überwachenden Raumabschnittes auf zu beleuchtende Teilbereiche kann in weiter vorteilhafter Weise auch eine Reduzierung der Baugröße eines solchen 3-D-Sensors im Vergleich zu einer Baugröße eines 3-D-Sensors erreicht werden, welcher den zu überwachenden Raumabschnitt bei vollflächiger Ausleuchtung und gleicher Lichtintensität pro beleuchteter Fläche erforderlich machen würde.

Um beispielsweise eine weitere Erhöhung der Lichtintensität pro beleuchteter Fläche erzielen zu können, können in weiter vorteilhafter Weise Fokussiermittel für die Lichtquelle, insbesondere bevorzugt für jede Beleuchtungsquelle vorgesehen sein. In einer möglichen Ausführungsform kann hierfür eine Fresnel-Linse vorgesehen sein. In besonders bevorzugter Weise ist hierfür eine gemeinsame Fresnel-Linse vorgesehen, durch die die von den Beleuchtungsquellen abgegebene Strahlung in den Raumabschnitt fokussiert wird.

Eine Fresnel-Linse reduziert die andernfalls für die gleiche optische Wirkung erforderliche Linsenbaugröße und damit die Gesamtbaugröße für den betreffenden 3-D-Sensor. Ein weiterer Vorteil der Verwendung einer Fresnel-Linse liegt in der sich hieraus ergebenden Möglichkeit, die einzelnen Beleuchtungsquellen näher aneinander zu positionieren, also zusammenzurücken, als dies bei der Verwendung mehrerer Einzellinsen für die Beleuchtungsquellen der Fall wäre. Dies bedingt sich einerseits durch die Ausdehnungsmaße solcher Linsen bzw, der Fresnel-Linse und andererseits durch die vergleichsweise deutlich günstigeren Brechungseigenschaften und damit einer besseren Fokussierung der einzelnen Spots der Fresnel-Linse gegenüber mehreren Einzellinsen.

Insbesondere aufgrund der deutlich verbesserten Lichtintensität pro Flächeneinheit kann ein Schwellwert für die Auswertung der von den Pixeln der Empfangsmatrix erfassten Signale vorgegeben werden, so dass die Kontrollvorrichtung nur Bildpunkte auswertet, deren Intensität diesen Schwellwert übersteigt. Hierdurch kann eine sehr hohe Schaltempfindlichkeit für den Sensor erzielt werden, der schlussendlich ein Schaltsignal an die ihm zugeordnete Tür- und/oder Torsteuerung und/oder an eine entsprechende andere übergeordnete Kontrollinstanz abgibt. Das Schaltsignal könnte beispielsweise ein Verlangsamen oder Stoppen der Türe veranlassen.

In weiter bevorzugter Weise kann die Kontrollvorrichtung für die Auswertung der einem Teilbereich oder Unterteilbereich zugeordneten Bildpunkte zusammenfassen. Hierdurch kann ein Abgleich von Signalen einzelner Bildpunkte erfolgen. Beispielsweise können diese mit vorgegebenen Mustern verglichen werden oder dergleichen mehr.

Durch Vorsehen der Beleuchtungsquellen in der Art, dass sie diskret aktivierbar und/oder deaktivierbar ausgebildet sind, kann einerseits eine entsprechende Energieeinsparung und damit auch eine Standzeiterhöhung für die betreffenden Elemente erreicht werden, und andererseits können durch Aktivierung bzw. Deaktivierung entsprechend positionierte Beleuchtungsquellen unterschiedlichste Beleuchtungsmuster, wie sie bereits oben beschrieben wurden, für den zu überwachenden Raumbereich generiert werden.

In weiter bevorzugter Weise kann auch eine Aktivierung und/oder Deaktivierung bestimmter Beleuchtungsquellen in Abhängigkeit von einer Auswertung eines Bildes aufgrund der aktivierten Beleuchtungsquellen erfolgen. Hierdurch kann beispielsweise eine Modus-Anpassung des 3-D-Sensors entsprechend der oben beschriebenen vorrangigen Randüberwachung des zu überwachenden Raumabschnittes ausgehend von einem erkannten Objekt zu dessen Weiterverfolgung auf einen Modus des Sensors mit geändertem Beleuchtungsmuster, insbesondere im Innenbereich des zu überwachenden Raumabschnittes vorgenommen werden. Damit kann die Position des detektierten Objektes kontrolliert und entsprechend des Abstandes zwischen dem Objekt und der Gefahrenquelle eine entsprechend faktorisierte Gefahrenmeldung an eine übergeordnete Instanz gemeldet werden. Insbesondere kann die Aktivierung lediglich der Beleuchtungsquellen erfolgen, die denjenigen Unterteilbereichen entsprechen, die einem Unterteilbereich benachbart sind, in dem ein Objekt erkannt wurde. Ebenso kann eine Deaktivierung derjenigen Beleuchtungsquellen erfolgen, die denjenigen Unterteilbereichen entsprechen die nicht einem Unterteilbereich benachbart sind, in dem ein Objekt erkannt wurde.

Bezüglich der den Abstand definierenden Grenze zwischen Teilbereich und Zwischenraum sei noch erläutert, dass es sich hierbei um einen Schwellenwert der Intensität der Beleuchtung handelt. Der Zwischenraum ist jener Raum, dessen Beleuchtung unterhalb einer bestimmten Beleuchtungsintensität liegt. Die Teilbereiche als solche können diskrete Strahlen oder Strahlenbündel sein, die auf einer Fläche als Spots, also als Lichtpunkte erscheinen.

Die Wirkungsweise des 3-D-Sensors kann z. B. auf einem TOF-Prinzip beruhen (time of flight-Prinzip). Durch die Verwendung des TOF-Prinzips (Time-of-Flight) kann die Distanz eines Objekts im Überwachungsfeld als dritte Dimension bestimmt werden. Dadurch ist es möglich, nicht nur eine genau definierte Fläche zu überwachen, sondern mittels Kenntnis der Umgebungsbedingungen des Sensors diesen auf ein genau definiertes Überwachungsvolumen einzustellen. Der Sensor besteht dabei vorzugsweise aus einer kompakten Einheit, welche zugleich Sender und Empfänger beinhaltet. Im ersten Schritt wird die zu überwachende Szenerie mittels z. B. LEDs beleuchtet. Das ausgesendete Licht wird reflektiert und gelangt zurück in den Sensor, wo es mittels der Empfangseinheit detektiert wird. Der Empfangsteil besteht aus einem TOF-Chip mit mehreren Pixel. Jeder Pixel kann einen von einem Objekt reflektierten Messstrahl empfangen. Zum Beispiel wird moduliertes IR-Licht eingesetzt. Zur Abstandsbestimmung kann eine Phasenverschiebung zwischen empfangenem Signal und ausgesandtem Signal ausgewertet werden. Durch die entsprechende Auswertung resultiert ein Distanzwert für jedes Pixel, wodurch ein dreidimensionales/volumenmäßiges Erfassungsbild erzielt wird. Die Optik ist so ausgelegt, dass die Beleuchtung in einzelne diskrete Strahlen gebündelt bleibt, was zu entsprechenden Spots mit einer hohen Lichtintensität führt.

Die Verwendung eines 3-D-Sensors für die Überwachung ermöglicht mehr Flexibilität bei der applikationsspezifischen Anwendung. Der Sensor liefert z. B. ortsabhängig (in der x-y-Ebene bzw. der Ebene senkrecht zur Sensorachse) die Distanzwerte zum Objekt.

Der Abstand zwischen den Teilbereichen und/oder den Unterteilbereichen kann in einer bevorzugten Ausführungsform in etwa einer Strecke entsprechen, die von zwei Rändern eines beleuchteten Teilbereichs und/oder Unterteilbereichs überdeckt wird. Bei Lichtstrahlen mit runder Kontur kann dies beispielsweise deren Durchmesser sein.

Als eine mögliche Ausführungsform einer Beleuchtungsquelle kann beispielsweise eine LED, insbesondere eine Infrarot-LED Verwendung finden, aber auch andere Lichtquellen, vorzugsweise mit in etwa punktförmiger Strahlungsquelle.

### Ausführungsbeispiel:

Bezugnehmend auf die beigefügten Figuren werden nachfolgend mehrere mögliche Ausführungsfcrmen eines erfindungsgemäßen 3-D-Sensors rein beispielhaft und schematisch näher erläutert. Es zeigen:
- Fig. 1 bis 3: Drei perspektivische Ansichten auf einen erfindungsgemäßen Sensor mit bzw. ohne Gehäuse,
- Fig. 4: einen durch einen Strahlenverlauf definierten Raumabschnitt und
- Fig. 5: die Aufteilung einer den Raumabschnitt begrenzenden Reflektionsfläche in Unterteilbereiche eines beleuchteten Teilbereichs und einen nicht beleuchteten Zwischenraum.

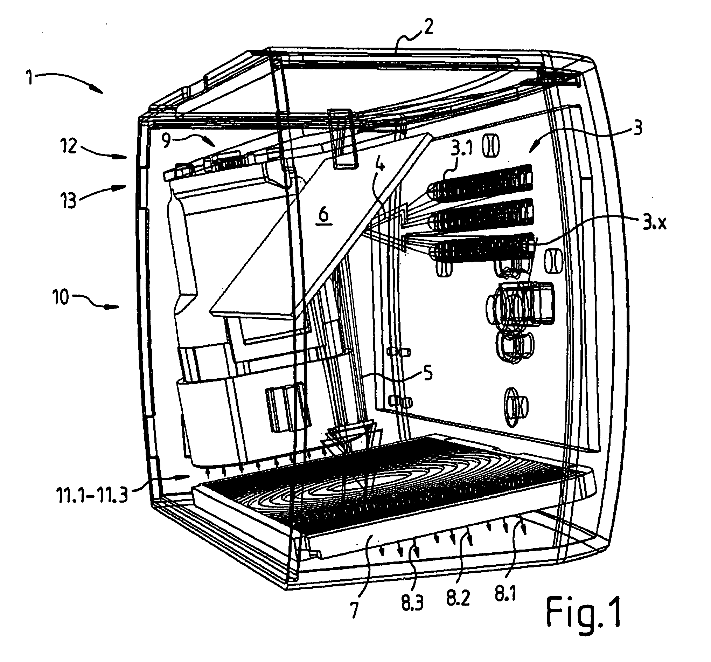

Demgemäß zeigt die Fig. 1 einen 3-D-Sensor 1 mit einem Gehäuse 2. Mehrere, beispielhaft in Reihen und Spalten angeordnete Beleuchtungsquellen 3.1 bis 3.x bilden eine Lichtquelle 3 zur Beleuchtung eines zu überwachenden Raumabschnittes aus. Pfeile 4, 5 stellen symbolisch die von den einzelnen Beleuchtungsquellen bzw. Reihen von Beleuchtungsquellen ausgehenden und an einem Strahlenlenkmittel in der Form eines Umlenkspiegels 6 umgelenkten Strahlenbündel dar, die zur Symbolisierung diskreter einzelner Strahlenbündel beispielhaft mit mehreren überlagerten Pfeilen dargestellt sind. Diese Anzahl jeweils diskret ausgebildeter Strahlenbündel werden mittels eines weiteren Strahlenlenkmittels, welches hier in der Form einer Fresnel-Linse 7 ausgebildet ist, weiter gebündelt. Wiederum symbolisch sind an der Strahlenausgangsseite der Fresnel-Linse drei Reihen 8.1, 8.2 und 8.3 kleiner gebündelter, diskret ausgebildeter Lichtstrahlen dargestellt.

Das Strahlenfokusier- bzw. Strahlenlenkmittel 7 kann alternativ und/oder zusätzlich zu der in Fig. 1 nach innen hin gerichtet dargestellten Fresnel-Struktur auch auf der ihr gegenüberliegenden, vom Sensor nach außen gerichteten Oberfläche eine weitere Fresnel-Struktur aufweisen. Hierdurch kann z. B. eine weitere Fokusierung und/oder Bündelung der einzelnen Lichtstrahlen erreicht werden.

Die so aus dem 3-D-Sensor austretenden diskreten Strahlenbündel werden an den von Ihnen bestrahlten Flächen zurück zum 3-D-Sensor reflektiert und treten als Strahlenbündel 11.1 bis 11.3 in eine einer Empfangsmatrix 9 zugeordnete Empfangsoptik 10 ein. In der Empfangsmatrix bilden sie ein komplettes Bild von den Flächen ab, die das von der Lichtquelle ausgesandte Licht reflektieren. Beispielsweise ist der 3-D-Sensor an einer Oberseite einer Türe befestigt und die abzubildende Fläche ist eine rechteckige Fläche am Boden vor der Türe.

Eine Auswertevorrichtung 12 ermittelt den Abstand zwischen der Empfangsmatrix und vorzugsweise für jedes einzelne Pixel dieser Matrix den Abstand zwischen dieser Matrix und einer den jeweiligen, bijektiv zugeordneten Lichtstrahl reflektierenden Oberfläche.

Im Fall eines Eindringen eines Objekts in diesen zu überwachenden Raumabschnitt ändern sich die von der Auswertevorrichtung ermittelten Abstände zwischen Pixeln der Empfangsmatrix und einer die von der Lichtquelle ausgesandten, reflektierenden Oberfläche, in diesem Fall des eindringenden oder sich im zu überwachenden Raumbereich befindlichen Objekts.

Mittels der Kontrollvorrichtung kann bei einer Änderung von Abstandswerten eine Überprüfung erfolgen, ob ein Objekt in den zu überwachenden Raumabschnitt eindringt und/oder sich darin befindet.

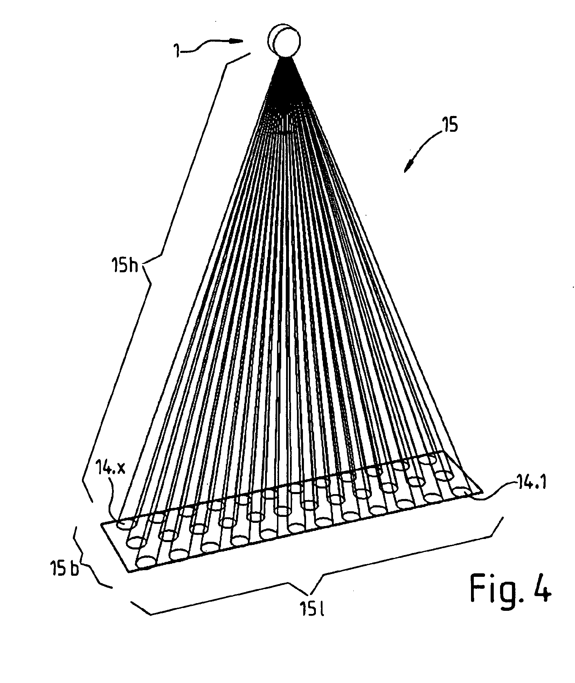

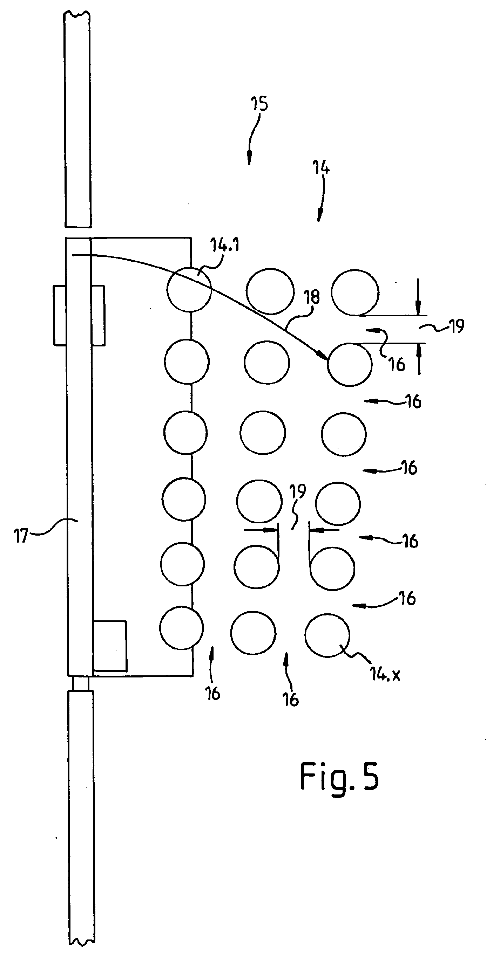

Durch die diskrete Ausbildung der einzelnen Beleuchtungsstrahlen gemäß der Strahlenreihen 8.1 bis 8.3 wird lediglich ein Teilbereich 14 des Raumabschnittes 15 beleuchtet (vgl. Fig. 4 und 5). Der Raumabschnitt 15 wird hierbei durch einen Abstand 15h zwischen dem 3-D-Sensor 1 und einer durch eine Breite 15b und eine Länge 151 aufgespannten Fläche definiert.

Der von der Lichtquelle beleuchtete Teilbereich 14 weist einen nicht beleuchteten Zwischenraum 16 auf. Gemäß der Darstellung in der Fig. 5 ist der Teilbereich in mehrere Unterteilbereiche 14.1 bis 14.x aufgeteilt, die hierbei beispielhaft jeweils diskret abgegrenzt sind.

In der Figur 5 ist eine Draufsicht auf die Grundfläche eines beispielhaft zu überwachenden Raumabschnitts 15 dargestellt, der sich im Schwenkbereich eines beispielsweise durch einen Antrieb beweglich angetriebenen Schießelementes 17, z. B. in der Form einer Tür, befindet. Die Verschwenkbarkeit des Schließelementes 17 ist schematisch durch den Pfeil 18 symbolisiert. Um sicherzustellen, dass sich während einer Bewegung des Schließelementes kein Objekt in diesem Gefahrenbereich befindet überwacht der 3-D-Sensor 1 den betreffenden Raumabschnitt 15.

Um sicherzustellen, dass Objekte mit einer bestimmten Mindestgröße zuverlässig erkannt werden ist ein Abstand 19 zwischen den Teilbereichen und/oder Unterteilbereichen definiert, der kleiner ist als die kleinste Ausdehnung eines betreffenden Prüfkörpers. Alle Objekte, die gleich groß oder größer als dieser Abstand sind verursachen in dem von der Empfangsmatrix erfassten Bild wenigstens eine Abstandsänderung zwischen einem Pixel und der die von der Lichtquelle ausgesandte Strahlung reflektierenden Fläche.

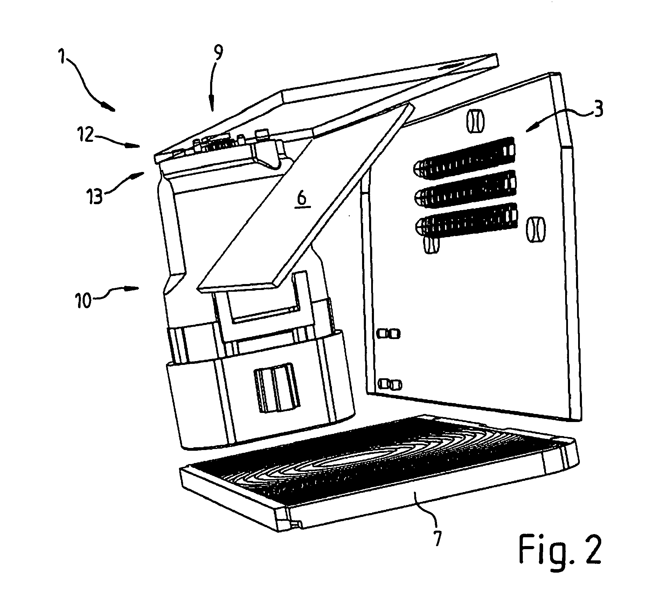

Die Figur 2 zeigt den 3-D-Sensor in etwa gleicher Perspektive wie die Figur 1, jedoch ohne Gehäuse und ohne Strahlengänge, um die einzelnen Elemente besser erkennbar darzustellen.

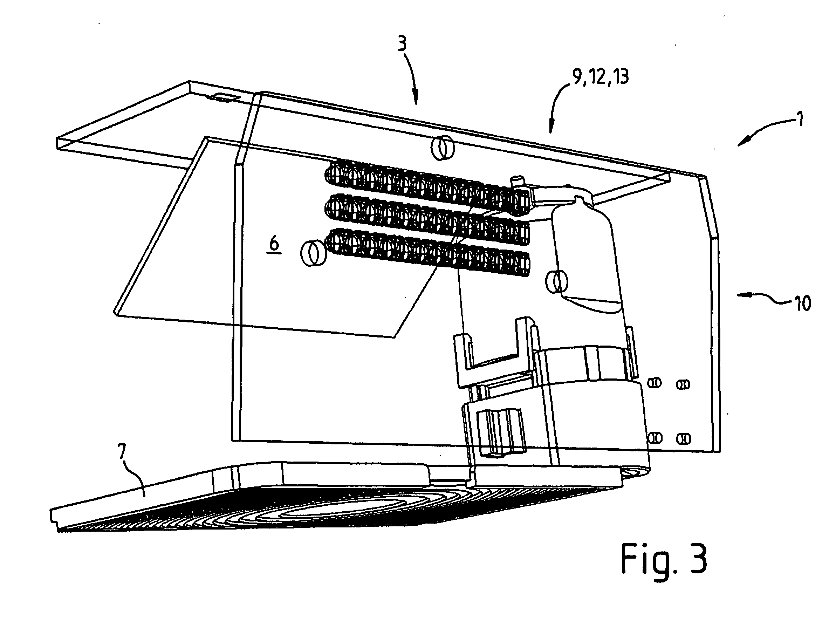

Die Figur 3 zeigt wiederum den 3-D-Sensor, ebenfalls ohne Gehäuse und ohne Strahlengänge, jedoch von vorne und schräg unten.

### Bezugszeichenliste:

- 1: 3-D-Sensor
- 2: Gehäuse
- 3: Lichtquelle
- 4: Pfeil
- 5: Pfeil
- 6: Umlenkspiegel
- 7: Fresnel-Linse
- 8: Pfeil
- 9: Empfangsmatrix
- 10: Empfangsoptik
- 11: Pfeil
- 12: Auswertevorrichtung
- 13: Kontrollvorrichtung
- 14: Teilbereich
- 15: Raumabschnitt
- 16: Zwischenraum
- 17: Schließelement
- 18: Pfeil
- 19: Abstand

## Patentansprüche

1. Time-of-Flight-3-D-Sensor (1) zur Steuerung eines Steuervorgangs, mit einer Lichtquelle (3) zur Beleuchtung eines zu überwachenden Raumabschnittes, mit einer Empfangsmatrix (9) zum Empfang des von der Lichtquelle ausgesandten und an in dem zu überwachenden Raumabschnitt befindlichen Flächen reflektierten Lichtes, mit einer Auswertevorrichtung (12) zur Ermittlung der Abstände der Flächen von der Empfangsmatrix, und mit einer Kontrollvorrichtung (13) zur Erkennung eines im zu überwachenden Raumabschnitt (15) befindlichen und/oder eindringenden Objekts anhand unterschiedlicher Tiefe des Raumabschnittes zwischen der Empfangsmatrix und den auf ihr abzubildenden Flächen, **dadurch gekennzeichnet, dass** die Lichtquelle mehrere Beleuchtungsquellen (3.1 - 3.x) umfasst, die einen Teilbereich (14) des Raumabschnittes (15)beleuchten, der mindestens einen Zwischenraum (16) aufweist, welcher nicht oder zumindest nicht in dem Maße beleuchtet ist, wie es für den Teilbereich (14) vorgesehen ist, und wobei die Empfangsmatrix (9) geeignet ist, ein komplettes Bild von den Flächen (14.1, bis 14.x) des Raumabschnitts (15) zu empfangen, die das von der Lichtquelle ausgesandte Licht reflektieren, wobei der Teilbereich (14) mehrere Unterteilbereiche (14.1 - 14.x) aufweist, die durch einen Zwischenraum (16) getrennt sind, und wobei jedem Unterteilbereich (14.1 - 14.x) eine Beleuchtungsquelle zugeordnet ist.

2. Time-of-Flight-3-D-Sensor nach einem der vorangehenden Ansprüche, **dadurch gekennzeichnet, dass** die Lichtquelle die Unterteilbereiche gleichzeitig beleuchtet.

3. Time-of-Flight-3-D-Sensor nach einem der vorangehenden Ansprüche, **dadurch gekennzeichnet, dass** die Unterteilbereiche in mindestens einer Reihe und/oder Spalte angeordnet sind.

4. Time-of-Flight-3-D-Sensor nach einem der vorangehenden Ansprüche, **dadurch gekennzeichnet, dass** die Lichtquelle derart ausgestaltet ist, dass ein Abstand (19) zwischen den Teilbereichen und/oder Unterteilbereichen kleiner ist als die kleinste Ausdehnung des für den Steuervorgang maßgeblichen Prüfobjekts.

5. Time-of-Flight-3-D-Sensor nach einem der vorangehenden Ansprüche, **dadurch gekennzeichnet, dass** die Kontrollvorrichtung nur Bildpunkte auswertet, deren Intensität einen Schwellenwert übersteigt.

6. Time-of-Flight-3-D-Sensor nach einem der vorangehenden Ansprüche, **dadurch gekennzeichnet, dass** die Kontrollvorrichtung für die Auswertung die einem Teilbereich oder Unterteilbereich zugeordneten Bildpunkte zusammenfasst.

## Claims

1. Time-of-flight 3D sensor (1) for controlling a control process, with a light source (3) for illuminating a spatial portion to be monitored, with a receiving matrix (9) to receive the light emitted by the light source and reflected on areas located in the spatial portion to be monitored, with an evaluation device (12) for determining the distances of the areas from the receiving matrix, and with a checking device (13) for detecting an object located and/or penetrating in the spatial portion (15) to be monitored with the aid of a different depth of the spatial portion between the receiving matrix and the areas to be imaged thereon, **characterised in that** the light source comprises a plurality of illumination sources (3.1 to 3.x), which illuminate a part region (14) of the spatial portion (15), which has at least one intermediate space (16), which is not illuminated or at least not to the extent such as is provided for the part region (14), and wherein the receiving matrix (9) is suitable for receiving a complete image of the areas (14.1 to 14.x) of the spatial portion (15), which reflect the light emitted by the light source, wherein the part region (14) has a plurality of sub-part regions (14.1 to 14.x), which are separated by an intermediate space (16), and wherein an illumination source is associated with each sub-part region (14.1 to 14.x).

2. Time-of-flight 3D sensor according to any one of the preceding claims, **characterised in that** the light source simultaneously illuminates the sub-part regions.

3. Time-of-flight 3D sensor according to any one of the preceding claims, **characterised in that** the sub-part regions are arranged in at least one row and/or column.

4. Time-of-flight 3D sensor according to any one of the preceding claims, **characterised in that** the light source is configured in such a way that a distance (19) between the part regions and/or sub-part regions is smaller than the smallest extent of the test object that is decisive for the control process.

5. Time-of-flight 3D sensor according to any one of the preceding claims, **characterised in that** the checking device only evaluates pixels, the intensity of which exceeds a threshold value.

6. Time-of-flight 3D sensor according to any one of the preceding claims, **characterised in that** the checking device combines the pixels associated with a part region or sub-part region for the evaluation.

## Revendications

1. Capteur de temps de vol 3D (1) pour commander une opération de commande, avec une source lumineuse (3) pour éclairer une portion d'espace à surveiller, avec une matrice de réception (9) pour recevoir la lumière émise par la source lumineuse et réfléchie sur des surfaces se trouvant dans la portion d'espace à surveiller, avec un dispositif d'exploitation (12) pour déterminer les distances séparant les surfaces de la matrice de réception, et avec dispositif de contrôle (13) pour reconnaître un objet se trouvant et/ou pénétrant dans la portion d'espace à surveiller (15) à l'aide de différentes profondeurs de la portion d'espace entre la matrice de réception et les surfaces à représenter sur celle-ci, **caractérisé en ce que** la source lumineuse comprend plusieurs sources d'éclairage (3.1 - 3.x) qui éclairent une zone partielle (14) de la portion d'espace (15), laquelle portion d'espace présente au moins un interstice (16) qui n'est pas éclairé, ou tout du moins pas aussi éclairé que ce qui est prévu pour la zone partielle (14), et la matrice de réception (9) est apte à recevoir une image complète des surfaces (14.1 à 14.x) de la portion d'espace (15) qui réfléchissent la lumière envoyée par la source lumineuse, la zone partielle (14) présentant plusieurs sous-zones (14.1 - 14.x) qui sont séparées par un interstice (16), et chaque sous-zone (14.1 - 14.x) étant associée à une source d'éclairage.

2. Capteur de temps de vol 3D selon l'une des revendications précédentes, **caractérisé en ce que** la source lumineuse éclaire simultanément les sous-zones.

3. Capteur de temps de vol 3D selon l'une des revendications précédentes, **caractérisé en ce que** les sous-zones sont disposées en au moins une ligne et/ou une colonne.

4. Capteur de temps de vol 3D selon l'une des revendications précédentes, **caractérisé en ce que** la source lumineuse est conçue de telle sorte qu'une distance (19) entre les zones partielles et/ou les sous-zones est inférieure à la plus petite dimension de l'objet à contrôler significatif pour l'opération de commande.

5. Capteur de temps de vol 3D selon l'une des revendications précédentes, **caractérisé en ce que** le dispositif de contrôle n'exploite que les points d'image dont l'intensité dépasse une valeur seuil.

6. Capteur de temps de vol 3D selon l'une des revendications précédentes, **caractérisé en ce que** le dispositif de contrôle, pour l'exploitation, regroupe les points d'image associés à une zone partielle ou une sous-zone.
